# EUROPÄISCHE PATENTSCHRIFT

(11) **EP 3 326 813 B1**
(45) Veröffentlichungstag und Bekanntmachung des Hinweises auf die Patenterteilung: **17.03.2021**
(21) Anmeldenummer: 17202525.6
(22) Anmeldetag: 20.11.2017
(51) Int. Cl.: B32B 37/00, B32B 27/08, B32B 37/12, B32B 37/14

(54) **HITZEBESTÄNDIGE BIOBASIERTE LAMINIERTASCHE**
HEAT-RESISTANT BIOBASED LAMINATE POCKET
POCHETTE STRATIFIÉE D'ORIGINE BIOLOGIQUE RÉSISTANTE À LA CHALEUR

(30) Priorität: 23.11.2016 DE 102016122556
(43) Veröffentlichungstag der Anmeldung: 30.05.2018
(73) Patentinhaber: Swedex GmbH, 45127 Essen (DE)
(72) Erfinder: Vocke, Stephan, 45289 Essen (DE)
(74) Vertreter: Bendele, Tanja

(56) Entgegenhaltungen:
- EP-A1- 2 787 048
- WO-A2-02/43956
- DE-U1-202012 100 162
- DE-U1-202016 102 519

## Beschreibung

Die Erfindung betrifft eine Laminiertasche für das Einlaminieren von Blattgut, mit zwei übereinander liegenden Laminierfolien, die an mindestens einer ihrer Seitenkanten miteinander verbunden sind, wobei die Laminiertasche innenseitig eine hitzeaktivierbare Schmelzklebeschicht umfassend eine (i) Schmelzkleberzusammensetzung aufweist, und (ii) die Laminierfolien eine Zusammensetzung umfassend als mindestens eine Komponente bioabbaubare Polymere enthalten, und die Laminierfolien eine Wärmeformbeständigkeitstemperatur von mindestens 100 °C aufweisen. Die Erfindung betrifft weiterhin ein Verfahren zur Herstellung von biobasierten Laminiertaschen, sowie Laminiertaschen erhältlich nach diesem Verfahren.

Weltweit steigt die Nachfrage nach biobasierten und bioabbaubaren Produkten. Biobasiert bedeutet, dass die als solche bezeichnete Verbindung auf nachwachsenden Rohstoffen basiert und vorzugsweise ausschließlich aus diesen hergestellt worden ist. Als biobasierte Rohstoffe werden Verbindungen bezeichnet, die nicht rohölbasiert sind. Die Auswahl an biobasierten oder Bio-Kunststoffen die auf natürlichen und nachwachsenden Rohstoffen bestehen und zusätzlich nach DIN EN 13432 bioabbaubar sind ist begrenzt. Um rohölbasierte Kunststoffe zu ersetzen sind daher besonders Milchsäure basierende Polymere, sogenannte Polylactide, interessant, da sie zusätzlich bioabbaubar sind. Nach DIN EN 13432 müssen mindestens 90 % des organischen Materials in wässrigem Medium innerhalb von 6 Monaten in CO₂ umgewandelt werden, um als bioabbaubar zu gelten.

Produkte aus Polylactiden haben eine geringe Wärmeformbeständigkeit und sind aufgrund der niedrigen Glasübergangstemperatur der Polylactide nicht für Produkte geeignet, die Temperaturen über 60 °C überstehen müssen, wie Laminiertaschen.

Um in eine Laminiertasche eingefügtes Blattgut mit Hilfe eines Laminiergerätes laminieren zu können werden bei handelsüblichen Laminiertaschen im Allgemeinen Haft- oder Schmelzklebstoffe verwendet. Die hitzeaktivierbaren Schmelzklebstoffe, wie Ethylenvinylacetat basierte Schmelzkleber, werden üblicherweise bei Temperaturen zwischen 100 °C und 200 °C aktiviert. Amorphes Polylactid ist bei solchen Temperaturen nicht formstabil. Durch Zugabe von sogenannten Keimbildnern kann die Kristallinität des Polylactids angehoben und die Wärmeformstabilität erhöht werden. Hierzu üblicherweise verwendete mineralische Keimbildner können die Transparenz des Produktes negativ beeinflussen.

Werden hingegen Schmelzklebstoffe mit einer Aktivierungstemperatur unter der Wärmeformbeständigkeitstemperatur von Polylactiden, oder Haftklebstoffe, die schon bei Raumtemperatur eine Klebrigkeit aufweisen, verwendet, kann es zu einem vorzeitigen Verkleben der Laminiertaschen während der Lagerung kommen.

DE202016102519U1 offenbart ein Laminierfolienset mit einer Verbundfolie, deren Außenschicht einen transparenten Bio-Kunststoff, wie Bio-Polyethylenterephthalat umfasst.

EP2787048A1 und DE202012100162U1 offenbaren eine Laminierfolie umfassend eine Folienschicht aus einem bioabbaubaren Kunststoff, wie Polylactid.

Der Erfindung lag die Aufgabe zugrunde eine umweltfreundliche und transparente Laminiertasche bereit zu stellen, die zu einem möglichst großen Anteil aus biobasierten Komponenten besteht und zu einem möglichst großen Anteil kompostierbar, bzw. bioabbaubar ist. Diese Laminiertasche soll während des Laminiervorganges bzw. während des Aktivierens der hitzeaktivierbaren Schmelzklebeschicht ihre Form behalten.

Die erfindungsgemäßen Laminiertaschen sollen zudem lagerungsfähig sein, damit die Laminierung des Blattgutes im Anschluss an die Herstellung der Laminiertasche durchführbar ist.

Zur Lösung dieser Aufgabe wird eine Laminiertasche für das Einlaminieren von Blattgut bereitgestellt, mit zwei übereinander liegenden Laminierfolien, die an mindestens einer ihrer Seitenkanten miteinander verbunden sind, wobei die Laminiertasche innenseitig eine hitzeaktivierbare Schmelzklebeschicht umfassend eine (i) Schmelzkleberzusammensetzung aufweist, und (ii) die Laminierfolien eine Zusammensetzung umfassend als mindestens eine Komponente bioabbaubare Polymere enthält, und die Laminierfolien eine Wärmeformbeständigkeitstemperatur von mindestens 100 °C aufweisen und die bioabbaubaren Polymere mindestens ein biobasiertes Polymer enthalten, wobei das biobasierte Polymer einen Kristallisationsgrad (ΔH) gemessen als Schmelzwärme von größer gleich 30 J/g bis kleiner gleich 90 J/g aufweist.

Die (ii) Zusammensetzung der Laminierfolien sowie die (i) Schmelzkleberzusammensetzung sind vorzugsweise bioabbaubar und/oder biobasiert und enthalten bevorzugt Polylactide. Die Aufgabe wird weiterhin gelöst durch ein Verfahren zur Herstellung von biobasierten Laminiertaschen, sowie Laminiertaschen erhältlich nach diesem Verfahren.

Die vorliegende Erfindung betrifft eine Laminiertasche, die nach DIN EN 13432 bioabbaubare und biobasierte Komponenten enthält. Laminiertaschen dienen dem Einlaminieren von Blattgut in Kunststoff-Folien. Unter Blattgut im Sinne der Erfindung fallen beispielsweise Dokumente und bedruckte Materialien, insbesondere aus Papier. Die Laminiertaschen entsprechend der vorliegenden Erfindung umfassen zwei übereinander liegende Laminierfolien, die eine (ii) Zusammensetzung umfassend als mindestens eine Komponente bioabbaubare Polymere enthalten, und die an mindestens einer Seitenkante, vorzugsweise an zwei aneinander stoßenden Kanten, miteinander verbunden sind und auf den einander zugewandten Seiten eine hitzeaktivierbare Schmelzklebeschicht aufweisen, wobei die Schmelzklebeschicht eine (i) Schmelzkleberzusammensetzung umfasst. Das zu laminierende Blattgut kann zwischen den zwei übereinander liegenden Laminierfolien mittels eines handelsüblichen Laminiergeräts durch Anwendung von Hitze zur Aktivierung der Schmelzklebeschicht und optional von Druck laminiert werden.

Die Laminierfolien umfassend eine (ii) Zusammensetzung weisen ohne die hitzeaktivierbare Schmelzklebeschicht eine Dicke von 15 µm bis 260 µm, bevorzugt von 80 µm bis 175 µm, besonders bevorzugt von 125 µm bis 175 µm auf. In einer bevorzugten Ausführungsform sind die Laminierfolien Verbundfolien. Mit Verbundfolien bezeichnet man im Allgemeinen Folien, die aus mehr als einer Schicht bestehen. Die verwendeten Laminierfolien umfassen in einer bevorzugten Ausführungsform mindestens 2 Schichten, besonders bevorzugt mindestens 3 Schichten. Die Schichtdicken der einzelnen Schichten liegen hierbei zwischen 10 µm und 110 µm, ausgewählt aus 15 µm, 20 µm, 25 µm, 30 µm, 35 µm, 40 µm, 45 µm, 50 µm, 55 µm, 60 µm, 65 µm, 70 µm, 80 µm, 100 µm, 105 µm und 110 µm. In einer bevorzugten Ausführungsform liegen die Schichtdicken der einzelnen Schichten zwischen 15 µm und 105 µm. Die Schichtdicken der einzelnen Schichten innerhalb der Verbundfolien können sich voneinander unterscheiden, sodass die Laminierfolien verschiedene Schichten mit unterschiedlicher Schichtdicke aufweisen.

Eine besonders bevorzugte (ii) Zusammensetzung der Laminierfolien umfasst mindestens die Komponenten:
a1) von 67 Gew.-% bis 100 Gew.-% bioabbaubare Polymere
a2) von 0 Gew.-% bis 10 Gew.-% Keimbildner
a3) von 0 Gew.-% bis 13 Gew.-% Weichmacher
a4) von 0 Gew.-% bis 10 Gew.-% Additive
wobei die Gesamtzusammensetzung der Zusammensetzung der Laminierfolien 100 Gew.-% beträgt.

Die (ii) Zusammensetzung der Laminierfolien umfasst als mindestens eine Komponente nach DIN EN 13432 bioabbaubare Polymere. Erfindungsgemäße Polymere können Homopolymere und Copolymere, wie statistische Copolymere und Blockcopolymere umfassen.

Die erfindungsgemäßen bioabbaubaren Polymere in der (ii) Zusammensetzung der Laminierfolien haben ein Molekulargewicht (Mₙ) von 10000 g/mol bis 1000000 g/mol, bevorzugt von 45000 g/mol bis 800000 g/mol, besonders bevorzugt von 50000 g/mol bis 400000 g/mol.

Das Molekulargewicht wird bestimmt durch Gelpermeationschromatographie (GPC) mit Dreifachdetektion (Kombination eines Rayleigh-Lichtstreudetektors mit einem Viskositätsdetektor und einem Brechungsindexdetektor) mit Hexafluoroisopropanol als Elutionsmittel. Insbesondere weisen die bioabbaubaren Polymere eine Molekulargewichtsverteilung auf, so dass die bioabbaubaren Polymere immer aus einer Mischung von Polymeren mit unterschiedlicher Kettenlänge beziehungsweise Molekulargewicht bestehen. Ebenfalls können als bioabbaubare Polymere voneinander verschiedene Polymere mit unterschiedlichem Molekulargewicht verwendet werden.

Erfindungsgemäße bioabbaubare Polymere umfassen aliphatische Polyester, ausgesucht aus Polyhydroxyalkanoaten, wie Poly-3-hydroxybutyrat, Poly-3-hydroxyvalerat und Poly(3-hydroxybutyrat)-co-(3-hydroxyvalerat), Polylactiden und Polycaprolactonen.

Die bioabbaubaren Polymere können dabei ein Homopolymer und Mischungen aus mindestens zwei der Homopolymere ausgesucht aus Polyhydroxyalkanoat, wie Poly-3-hydroxybutyrat und Poly-3-hydroxyvalerat, Polylactid und Polycaprolacton, deren Copolymere, wie Poly(3-hydroxybutyrat)-co-(3-hydroxyvalerat) und Mischungen daraus enthalten.

In einer bevorzugten Ausführungsform enthalten die bioabbaubaren Polymere mindestens ein bioabbaubares und biobasiertes Polymer. Unter bioabbaubare und biobasierte Polymere fallen oben genannte bioabbaubare Polymere, die nicht auf Rohöl, sondern auf nachwachsenden Rohstoffen, wie Kohlenhydraten, insbesondere Glucose, Saccharose, Pflanzenöl oder Glycerin aus der Biodieselproduktion basieren. Die bioabbaubaren und biobasierten Polymere entsprechend der vorliegenden Erfindung umfassen aliphatische Polyester, ausgesucht aus Polyhydroxyalkanoaten, wie Poly3-hydroxybutyrat, Poly-3-hydroxyvalerat und Poly(3-hydroxybutyrat)-co-(3-hydroxyvalerat), und Polylactiden. Besonders bevorzugt sind die bioabbaubaren Polymere Polylactide.

Nach einer besonders bevorzugten Ausführungsform werden biobasierte und bioabbaubare Polymere mit einer Wärmeformbeständigkeitstemperatur von über 100 °C, wie Poly(3-hydroxybutyrat)-co-(3-hydroxyvalerat) und Polylactide verwendet, insbesondere Polylactide mit einem Kristallisationsgrad von größer gleich 30 J/g bis kleiner gleich 90 J/g, bevorzugt von größer gleich 40 J/g bis kleiner gleich 90 J/g, besonders bevorzugt von größer gleich 60 J/g bis kleiner gleich 90 J/g, gemessen nach DIN EN ISO 1 1357-3 als Schmelzwärme.

In einer besonders bevorzugten Ausführungsform weisen die bioabbaubaren Polymere in der (ii) Zusammensetzung der Laminierfolien eine Wärmeformbeständigkeitstemperatur (bestimmt nach DIN EN ISO 75-1,-2,-3) von mindestens 100 °C, bevorzugt mindestens 120 °C, besonders bevorzugt von mindestens 150 °C auf. Die Wärmeformbeständigkeit ist ein Maß für die Temperaturbelastbarkeit von Kunststoffen oder einer Mischung verschiedener Kunststoffe und kann nach DIN EN ISO 75-1,-2,-3 bestimmt werden.

Werden erfindungsgemäß Mischungen von bioabbaubaren Polymeren in der (ii) Zusammensetzung der Laminierfolien verwendet, so bezieht sich die genannte Wärmeformbeständigkeitstemperatur auf die gesamte Mischung der bioabbaubaren Polymere. Die (ii) Zusammensetzung der Laminierfolie kann erfindungsgemäß aus a1) bioabbaubaren Polymeren bestehen.

In einer alternativen Ausführungsform können daher ebenfalls die (ii) Zusammensetzung der Laminierfolien, und/oder die Laminierfolien eine Wärmeformbeständigkeitstemperatur (bestimmt nach DIN EN ISO 75-1,-2,-3) von mindestens 100 °C, bevorzugt mindestens 120 °C, besonders bevorzugt von mindestens 150 °C aufweisen.

Die (ii) Zusammensetzung der Laminierfolien kann mindestens 67 Gew.-% bioabbaubare Polymere enthalten, bevorzugt von 67 Gew.-% bis 100 Gew.-%, alternativ aus 90 Gew.-% bis 99,9 Gew.-%, besonders bevorzugt von 97 Gew.-% bis 99,9 Gew.-% bezogen auf den Gesamtgehalt der Zusammensetzung der Laminierfolien von 100 Gew.-%.

In einer besonders bevorzugten Ausführungsform können die bioabbaubaren Polymere mindestens ein Polylactid enthalten, besonders bevorzugt bestehen die bioabbaubaren Polymere aus mindestens einem Polylactid.

Bei Polylactiden handelt es sich um biologisch abbaubare Kunststoffe aus dem nachwachsenden Rohstoff Milchsäure. Milchsäure ist eine Hydroxycarbonsäure mit einer Carboxy-Gruppe und einer Hydroxy-Gruppe mit den unterschiedlichen Isomeren, linksdrehende (L)-Milchsäure und rechtsdrehende (D)-Milchsäure. Racemate sind Mischungen beider Isomere mit einem Verhältnis von 1 : 1.

Ein Lactid ist ein cyclischer Diester oder Dimer der Milchsäure. Analog zu den Monomeren können Dimere ebenfalls als unterschiedliche Isomere (L,L)-Lactid, (D,D)-Lactid und (meso)-Lactid vorliegen. Das Lactid der L-Milchsäure genannt (L)-Lactid hat eine (L,L)-Konfiguration, und das Lactid der D-Milchsäure, genannt (D)-Lactid, hat eine (D,D)-Konfiguration. Das (D,L)-Lactid besteht aus einer L- und D-Milchsäure und ist folglich ein Lactid mit zwei Asymmetriezentren mit entgegengesetzter Konfiguration D und L.

Die erfindungsgemäßen Polylactide umfassen Homopolymere eines der oben genannten Lactide, Copolymere der genannten Lactide und Mischungen dieser Homopolymere und/oder Copolymere. Die Homopolymere umfassen Polyester des L-Lactids, D-Lactids und D,L-Lactids ausgesucht aus Poly(L)-Lactid, Poly(D)-Lactid und Poly(D,L)-Lactid. Die Copolymere umfassen statistische Copolymere und Block-Copolymere aus L-Lactid, D-Lactid und D,L-Lactid, wie die Blockcopolymere Poly(L)-Lactid-co-(D)-Lactid und Poly(L)-Lactid-co-(D,L)-Lactid. In den Blockcopolymeren können die Verhältnisse der mindestens zwei Lactide mit unterschiedlicher Konfiguration ausgesucht aus L-Lactid : D-Lactid und L-Lactid : D,L-Lactid, zueinander variieren von 30 : 1 bis 1 : 30, bevorzugt 50 : 50.

In einer bevorzugten Ausführungsform können die bioabbaubaren Polymere aus einem Gemisch von statistischen Copolymeren bestehend aus L-Lactid und D-Lactid bestehen. Das Gemisch kann bevorzugt ein Copolymer I) bestehend aus L-Lactid und D-Lactid, mit einem L-Lactid Anteil von mindestens 90 Gew.-%, bevorzugt mindestens 95 Gew.-%, besonders bevorzugt von mindestens 99,5 Gew.-% bezogen auf das Copolymer I) und ein Copolymer II) bestehend aus L-Lactid und D-Lactid, mit einem L-Lactid Anteil von mindestens 90 Gew.-%, bevorzugt mindestens 95 Gew.-%, besonders bevorzugt von mindestens 99,5 Gew.-% bezogen auf das Copolymer II) enthalten. Die statistischen Copolymere I) und II) können in einem Verhältnis I) : II) von 99 : 1 bis 1 : 99 vorliegen, bevorzugt in einem Verhältnis von 75 : 25 bis 25 : 75, besonders bevorzugt in einem Verhältnis von 50 : 50.

Nach dieser besonders bevorzugten Ausführungsform ist die (ii) Zusammensetzung der Laminierfolien vollständig biobasiert und bioabbaubar. Der Kristallisationsgrad der in der (ii) Zusammensetzung der Laminierfolien enthaltenen Polylactide liegt, insbesondere nach der Kristallisation und optional Verstrecken, bei von größer gleich 30 J/g bis kleiner gleich 90 J/g bevorzugt von größer gleich 40 J/g bis kleiner gleich 90 J/g, besonders bevorzugt von größer gleich 60 J/g bis kleiner gleich 90 J/g, gemessen nach DIN EN ISO 1 1357-3 als Schmelzwärme.

Nach einer besonders bevorzugten Ausführungsform betrifft die Erfindung eine Laminiertasche für das Einlaminieren von Blattgut mit zwei übereinander liegenden Laminierfolien, die an mindestens einer ihrer Seitenkanten miteinander verbunden sind, wobei die Laminiertasche innenseitig eine hitzeaktivierbare Schmelzklebeschicht umfassend eine (i) Schmelzkleberzusammensetzung aufweist, und (ii) die Laminierfolien eine Zusammensetzung umfassend als mindestens eine Komponente bioabbaubare Polymere enthält, und die Laminierfolien eine Wärmeformbeständigkeitstemperatur von mindestens 100 °C aufweisen, wobei die bioabbaubaren Polymere aus einem Gemisch von statistischen Copolymeren bestehend aus L-Lactid und D-Lactid enthalten.

In einer weiteren bevorzugten Ausführungsform können die bioabbaubaren Polymere ein Gemisch der Homopolymere Poly(L)-Lactid und Poly(D)-Lactid, bevorzugt von 50 Gew.-% bis 75 Gew.-% Poly(L)-Lactid und von 25 Gew.-% bis 50 Gew.-%, besonders bevorzugt von 50 Gew.-% bis 70 Gew.-% Poly(L)-Lactid und von 30 Gew.-% bis 50 Gew.-% Poly(D)-Lactid, insbesondere von 75 Gew.-% bis 60 Gew.-% Poly(L)-Lactid und von 25 Gew.-% bis 40 Gew.-% Poly(D)-Lactid enthalten, bezogen auf den Gesamtgehalt der bioabbaubaren Polymere von 100 Gew.-%.

Es ist bekannt, dass Mischungen aus den Homopolymeren Poly(L)-Lactid und Poly(D)-Lactid und das Copolymer Poly(L)-Lactid-co-(D)-Lactid Stereokomplexe ausbilden können. Als Stereokomplex bezeichnet man einen racemischen Kristall der die Homopolymere Poly(L)-Lactid und Poly(D)-Lactid in einer wohlgeordneten alternierenden Anordnung enthält. Die Homopolymere können auch im Sinne eines Copolymers kovalent verbunden sein. Die Bestimmung des Anteils des stereokomplexierten Polylactids am Gesamtgehalt des Polylactids erfolgt mittels dynamischer Differenzkalorimetrie (DSC) nach ASTM D3418 unter Verwendung eines Kalorimeters der Firma Perkin Elmer. Ein hoher Gehalt an Stereokomplexen erhöht die Wärmeformbeständigkeit des mindestens einen Polylactids in der (ii) Zusammensetzung der Laminierfolien.

Die (ii) Zusammensetzung der Laminierfolien kann von 0,5 Gew.-% bis 50 Gew.-%, an stereokomplexiertem Polylactid bzw. racemischen Kristall der Homopolymere Poly(L)-Lactid und Poly(D)-Lactid, bevorzugt von 1 Gew.-% bis 20 Gew.-%, besonders bevorzugt von 2 Gew.-% bis 10 Gew.-% enthalten, bezogen auf den Gesamtgehalt der bioabbaubaren Polymere von 100 Gew.-%.

In einer besonders bevorzugten Ausführungsform können die bioabbaubaren Polymere aus einem Gemisch der Homopolymere Poly(L)-Lactid und Poly(D)-Lactid, bevorzugt mit 50 Gew.-% bis 75 Gew.-% Poly(L)-Lactid und von 25 Gew.-% bis 50 Gew.-% Poly(L)-Lactid, besonders bevorzugt mit 50 Gew.-% bis 70 Gew.-% Poly(L)-Lactid und von 30 Gew.-% bis 50 Gew.-% Poly(D)-Lactid, insbesondere mit 75 Gew.-% bis 60 Gew.-% Poly(L)-Lactid und von 25 Gew.-% bis 40 Gew.-% aus Poly(D)-Lactid bestehen, bezogen auf den Gesamtgehalt der bioabbaubaren Polymere von 100 Gew.-%, wobei die bioabbaubaren Polymere von 0,5 Gew.-% bis 50 Gew.-%, an stereokomplexiertem Polylactid bzw. racemischen Kristall der Homopolymere Poly(L)-Lactid und Poly(D)-Lactid, bevorzugt von 1 Gew.-% bis 20 Gew.-%, besonders bevorzugt von 2 Gew.-% bis 10 Gew.-% enthalten können, bezogen auf den Gesamtgehalt der bioabbaubaren Polymere von 100 Gew.-%.

Nach einer besonders bevorzugten Ausführungsform betrifft die Erfindung eine Laminiertasche für das Einlaminieren von Blattgut, mit zwei übereinander liegenden Laminierfolien, die an mindestens einer ihrer Seitenkanten miteinander verbunden sind, wobei die Laminiertasche innenseitig eine hitzeaktivierbare Schmelzklebeschicht umfassend eine (i) Schmelzkleberzusammensetzung aufweist, und (ii) die Laminierfolien eine Zusammensetzung umfassend als mindestens eine Komponente bioabbaubare Polymere enthält, und die Laminierfolien eine Wärmeformbeständigkeitstemperatur von mindestens 100 °C aufweisen, wobei die bioabbaubaren Polymere aus einem Gemisch der Homopolymere Poly(L)-Lactid und Poly(D)-Lactid bestehen, besonders bevorzugt von 50 Gew.-% bis 75 Gew.-% Poly(L)-Lactid und von 25 Gew.-% bis 50 Gew.-% aus Poly(D)-Lactid bezogen auf den Gesamtgehalt der bioabbaubaren Polymere von 100 Gew.-%., wobei die bioabbaubaren Polymere in der (ii) Zusammensetzung der Laminierfolien von 0,5 Gew.-% bis 50 Gew.-%, an stereokomplexiertem Polylactid bzw. racemischen Kristall der Homopolymere Poly(L)-Lactid und Poly(D)-Lactid enthalten, bevorzugt von 1 Gew.-% bis 20 Gew.-%, besonders bevorzugt von 2 Gew.-% bis 10 Gew.-% bezogen auf den Gesamtgehalt der bioabbaubaren Polymere von 100 Gew.-%.

Um die Hitzebeständigkeit von Polylactid-Produkten zu verbessern kann der Kristallisationsgrad von Polylactid erhöht werden. Kristallwachstum geschieht in einem Temperaturbereich zwischen der Schmelztemperatur (Tₘ) und der Glasübergangstemperatur (T_{g}). Der Kristallisationsgrad bezeichnet jenen Anteil eines teilkristallinen Feststoffes, der kristallin, d.h. nicht amorph ist und kann durch die nach DIN EN ISO 1 1357-3 bestimmte Schmelzwärme ausgedrückt werden. Die Schmelztemperatur (Tₘ) und die Glasübergangstemperatur (T_{g}) eines Stoffes können nach ISO 11357-2 und ISO 11357-3 bestimmt werden.

Durch die erfindungsgemäße (ii) Zusammensetzung der Laminierfolien umfassend als mindestens eine Komponente a1) bioabbaubare Polymere umfassend mindestens ein Polylactid und/oder den Einsatz von a2) Keimbildnern in der (ii) Zusammensetzung der Laminierfolien kann der Kristallisationsgrad des Polylactids erhöht werden und so eine Wärmeformbeständigkeitstemperatur größer der von amorphem Polylactid erreicht werden.

Eine zum Extrudieren verwendete erste Zusammensetzung und/oder die Laminierfolie einer ersten Zusammensetzung kann eine Wärmeformbeständigkeitstemperatur von kleiner 65 °C haben, bevorzugt von kleiner 99 °C, alternativ von kleiner 130 °C.

Die erfindungsgemäßen bioabbaubaren Polymere und/oder die (ii) Zusammensetzung der Laminierfolien, und/oder die Laminierfolien haben eine Wärmeformbeständigkeitstemperatur von über 100 °C, bevorzugt von 130 °C, besonders bevorzugt von über 150 °C.

Bevorzugt weist das mindestens eine Polylactid in der (ii) Zusammensetzung der Laminierfolie insbesondere nach der Kristallisierung bei erhöhter Temperatur einen gegenüber der zur Extrusion verwendeten ersten Zusammensetzung einen erhöhten Kristallisationsgrad auf. Die erste Zusammensetzung und die (ii) Zusammensetzung der Laminierfolien unterscheiden sich dabei nur durch den Kristallisationsgrad des enthaltenen Polylactids.

Die Polylactide in der ersten Zusammensetzung können einen Kristallisationsgrad von kleiner gleich 25 J/g aufweisen, bevorzugt von kleiner gleich 15 J/g, besonders bevorzugt von kleiner gleich 5 J/g, gemessen nach DIN EN ISO 1 1357-3 als Schmelzwärme.

Die Polylactide in der (ii) Zusammensetzung der Laminierfolien können einen Kristallisationsgrad von größer gleich 30 J/g bis kleiner gleich 90 J/g aufweisen, bevorzugt von größer gleich 40 J/g bis kleiner gleich 90 J/g, besonders bevorzugt von größer gleich 60 J/g bis kleiner gleich 90 J/g, gemessen nach DIN EN ISO 1 1357-3 als Schmelzwärme.

Der Kristallisationsgrad kann auch in Prozent angegeben werden und ergibt sich aus dem Verhältnis zwischen der Schmelzwärme eines zu 100 % vollständig kristallisierten Stoffes und der Schmelzwärme des entsprechenden teilkristallinen Stoffes. Die Schmelzwärme von vollständig kristallisiertem Polylactid liegt bei 93 J/g. Der Kristallisationsgrad in Prozent des in der (ii) Zusammensetzung der Laminierfolien enthaltenen Polylactids beträgt somit von größer gleich 32 % bis kleiner gleich 97 %, bevorzugt von größer gleich 43 % bis kleiner gleich 97 %, besonders bevorzugt von größer gleich 65 % bis kleiner gleich 97 %.

Ein erfindungsgemäßer Kristallisationsgrad kann durch Verwendung sogenannter Keimbildner erreicht werden, die die Keimzahl erhöhen. Hierzu kann die (ii) Zusammensetzung der Laminierfolien in einer bevorzugten Ausführungsform als Komponente a2) einen Keimbildner enthalten. Erfindungsgemäße Keimbildner umfassen natürliche und synthetische Keimbildner.

Unter natürliche Keimbildner fallen mineralische Keimbildner und natürliche Keimbildner pflanzlichen oder tierischen Ursprungs.

Mineralische Keimbildner sind beispielsweise Siliziumdioxide, Calciumcarbonate, Zinkoxide, Titandioxide, Aluminiumoxide, Aluminiumhydroxide oder Aluminiumoxidhydroxide, Magnesiumhydroxide, Magnesium-, Zink- oder Kalziumoxide. Karbonate/Sulfate umfassend Kreide, Dolomit, Baryt, Oxide/Hydroxide wie Quarzmehle und Silikate umfassend Ton, Lehm, Talkum, Glimmer, Kaolin, Neuburger Kieselerde, Ruß und Graphit.

Keimbildner tierischen oder pflanzlichen Ursprungs sind beispielsweise Fasern, Schrot, Staub, Holz, Kork, Hanf, Flachs, Gräser, Schilf, Stroh, Heu, Getreide, Mais, Nüsse, Kerne, Grannen, Holzmehle, Korkmehle, Getreidemehle, Maismehle, Kartoffelmehle, Knochen, Chitin, Haare, Borsten, Horn, Cellulosepulver, Stärke und Cerealien.

Synthetische Keimbildner umfassen Polymere mit einem Schmelzpunkt von 40 °C bis 150 °C, insbesondere Polyether und Polyester umfassend deren Homopolymere und Copolymere, wie beispielsweise Polyethylenglykol, aliphatische Polyester, wie Polylactide oder Polybutylenadipat und aliphatisch-aromatische Copolyester, wie beispielsweise Polybutylenadipat-Terephthalat und Polybutylenadipat-Succinat.

Synthetische Keimbildner umfassen weiterhin Amid-Gruppen enthaltene Stearine, wie Distearylethylendiamid und einige Salze und organische Verbindungen von Carbonsäuren, insbesondere der Phosphonsäure und der Phthalsäure, wie beispielsweise Dinatriumphenylphosphonat oder Natriumdimethyl-5-sulfoisophthalat.

In einer bevorzugten Ausführungsform kann die (ii) Zusammensetzung der Laminierfolien a2) bioabbaubare Keimbildner enthalten, ausgesucht aus Distearylethylendiamid, Polylactiden, wie Poly(D)-Lactid, Poly, Polybutylenadipat, Polybutylenadipat-Terephthalat und Polyethylenglykol. Das Polyethylenglykol hat in einer bevorzugten Ausführungsform ein Molekulargewicht (Mₙ) von 600 g/mol bis 1500 g/mol, bevorzugt 600 g/mol bis 1000 g/mol.

In einer bevorzugten Ausführungsform kann die (ii) Zusammensetzung der Laminierfolien als eine Komponente a1) bioabbaubare Polymere, a2) Keimbildner, wie Polyethylenglycol, und bevorzugt a3) Weichmacher, wie Glycerol, enthalten.

In einer besonders bevorzugten Ausführungsform umfasst die (ii) Zusammensetzung der Laminierfolien a1) mindestens ein Polylactid, ausgesucht aus den Homopolymeren Poly(L)-Lactid und Poly(D)-Lactid sowie statistischen Copolymeren aus (L)-Lactid und (D)-Lactid und a2) mindestens einen biobasierten und bioabbaubaren Keimbildner bestehend aus einem Gemisch der Homopolymere Poly(L)-Lactid und Poly(D)-Lactid. Besonders bevorzugt kann die Komponente a2) zu 50 Gew.-% bis 75 Gew.-% Poly(L)-Lactid und zu 25 Gew.-% bis 50 Gew.-% aus Poly(D)-Lactid bestehen, besonders bevorzugt mit 50 Gew.-% bis 70 Gew.-% Poly(L)-Lactid und von 30 Gew.-% bis 50 Gew.-% Poly(D)-Lactid, insbesondere mit 50 Gew.-% bis 60 Gew.-% Poly(L)-Lactid und von 25 Gew.-% bis 40 Gew.-% aus Poly(D)-Lactid bezogen auf den Gesamtgehalt der Komponente a2) von 100 Gew.-%.

In einer alternativen Ausführungsform kann die (ii) Zusammensetzung der Laminierfolien mineralische Keimbildner, wie Talkum, Kreide, Ruß und/oder Graphit enthalten.

Bei Verwendung von mineralischen Keimbildnern bei der Verarbeitung zu Folien kann es jedoch zu einem Verlust der Transparenz des Produktes kommen. Bei einer Laminiertasche sollte aber mindestens eine der Laminierfolien transparent sein, um eine Sichtbarkeit des laminierten Blattguts zu gewährleisten. Erfindungsgemäß kann die (ii) Zusammensetzung der Laminierfolien nur mineralische Keimbildner mit einem mittleren Partikeldurchmesser größer gleich 0,05 µm bis kleiner gleich 2 µm enthalten, bevorzugt 0,05 µm bis kleiner gleich 0,2 µm, die die Transparenz der Laminierfolien nicht beeinflussen.

Mindestens eine der beiden Laminierfolien entsprechend der vorliegenden Erfindung ist transparent. Transparent im Sinne der vorliegenden Erfindung bedeutet eine Trübung mit einem Wert von weniger als 10 %, vorzugweise weniger als 6 %, besonders bevorzugt weniger als 3 %. Die Trübung wird nach ASTM D1003 bestimmt.

Die (ii) Zusammensetzung der Laminierfolien kann von 0 Gew.-% bis 10 Gew.-% Keimbildner enthalten, bevorzugt von 0,1 Gew.-% bis 10 Gew.-% oder von 0,1 Gew.-% bis 5 Gew.-%, besonders bevorzugt 0,1 Gew.-% bis 3 Gew.-% bezogen auf den Gesamtgehalt der Zusammensetzung der Laminierfolien von 100 Gew.-%.

Die (ii) Zusammensetzung der Laminierfolien kann nach einer bevorzugten Ausführungsform a3) einen Weichmacher enthalten. Durch die Verwendung von Weichmachern in der (ii) Zusammensetzung der Laminierfolien wird die Kristallisation des Polylactids begünstigt und der Kristallisationsgrad erhöht.

Erfindungsgemäße Weichmacher umfassen Polyole, wie Glycerol und Sorbitol sowie Carbonsäureester, insbesondere Ester der Di- und/oder Tricarbonsäuren umfassend Phthalsäure, Oxalsäure, Malonsäure, Bernsteinsäure, Glutarsäure, Adipinsäure, Pimelibsäure, Suberinsäure, Azelainsäure, Zitronensäure, Trimesinsäure, Trimellithsäure und Hemimellithsäure, bevorzugt mit mindestens einem Alkylrest an der mindestens einen EsterGruppe ausgewählt aus C₁ bis C₄₀-Kohlenwassertstoffresten, besonders bevorzugt C₁ bis C₂₀-Alkylen, umfassend Methyl-, Ethyl-, Propyl-, Butyl-, Hexyl-, Nonyl-, Dodecyl- und Octadecyl-Reste.

Erfindungsgemäße Ester zur Verwendung als Weichmacher haben ein Molekulargewicht (M_{w}) von 100 g/mol bis 10000 g/mol, bevorzugt 100 g/mol bis 1000 g/mol, besonders bevorzugt 200 g/mol bis 800 g/mol, vorzugsweise 250 g/mol bis 500 g/mol.

In einer besonders bevorzugten Ausführungsform kann die (ii) Zusammensetzung der Laminierfolien a3) biobasierte Weichmacher enthalten, wie biobasiertes Glycerol oder biobasiertes Sorbitol.

Die (ii) Zusammensetzung der Laminierfolien kann von 0 Gew.-% bis 13 Gew.-% an Weichmacher, bevorzugt von 11 Gew.-% bis 13 Gew.-% enthalten, besonders bevorzugt von 11,5 Gew.-% bis 12,5 Gew.-% bezogen auf den Gesamtgehalt der Zusammensetzung der Laminierfolien von 100 Gew.-%.

Nach einer bevorzugten Ausführungsform betrifft die Erfindung eine Laminiertasche für das Einlaminieren von Blattgut, mit zwei übereinander liegenden Laminierfolien, die an mindestens einer ihrer Seitenkanten miteinander verbunden sind, wobei die Laminiertasche innenseitig eine hitzeaktivierbare Schmelzklebeschicht umfassend eine (i) Schmelzkleberzusammensetzung aufweist, und (ii) die Laminierfolien eine Zusammensetzung umfassend als eine Komponente a1) bioabbaubare Polymere und als eine Komponente a3) mindestens einen Weichmacher, bevorzugt Glycerol enthält, und die Laminierfolien eine Wärmeformbeständigkeitstemperatur von mindestens 100 °C aufweisen, wobei die bioabbaubaren Polymere aus einem Gemisch der Homopolymere Poly(L)-Lactid und Poly(D)-Lactid bestehen, besonders bevorzugt von 50 Gew.-% bis 75 Gew.-% Poly(L)-Lactid und von 25 Gew.-% bis 50 Gew.-% aus Poly(D)-Lactid bezogen auf den Gesamtgehalt der bioabbaubaren Polymere von 100 Gew.-%.

Nach einer besonders bevorzugten Ausführungsform betrifft die Erfindung eine Laminiertasche für das Einlaminieren von Blattgut, mit zwei übereinander liegenden Laminierfolien, die an mindestens einer ihrer Seitenkanten miteinander verbunden sind, wobei die Laminiertasche innenseitig eine hitzeaktivierbare Schmelzklebeschicht umfassend eine (i) Schmelzkleberzusammensetzung aufweist, und (ii) die Laminierfolien eine Zusammensetzung umfassend als eine Komponente a1) bioabbaubare Polymere und als eine Komponente a3) mindestens einen Weichmacher, bevorzugt Glycerol enthält, und die Laminierfolien eine Wärmeformbeständigkeitstemperatur von mindestens 100 °C aufweisen, wobei die bioabbaubaren Polymere aus einem Gemisch der Homopolymere Poly(L)-Lactid und Poly(D)-Lactid bestehen, besonders bevorzugt von 50 Gew.-% bis 75 Gew.-% Poly(L)-Lactid und von 25 Gew.-% bis 50 Gew.-% aus Poly(D)-Lactid bezogen auf den Gesamtgehalt der bioabbaubaren Polymere von 100 Gew.-%., wobei die bioabbaubaren Polymere in der (ii) Zusammensetzung der Laminierfolien von 0,5 Gew.-% bis 50 Gew.-%, an stereokomplexiertem Polylactid bzw. racemischen Kristall der Homopolymere Poly(L)-Lactid und Poly(D)-Lactid enthalten, bevorzugt von 1 Gew.-% bis 20 Gew.-%, besonders bevorzugt von 2 Gew.-% bis 10 Gew.-% bezogen auf den Gesamtgehalt der bioabbaubaren Polymere von 100 Gew.-%.

Die (ii) Zusammensetzung der Laminierfolien kann nach einer bevorzugten Ausführungsform als eine weitere Komponente a4) Additive enthalten. Diese dem Fachmann allgemein bekannten Additive umfassen Antiblockmittel, wie feinpulverige Oxide von Aluminium oder Silizium, Farbstoffe und Pigmente, wie Titandioxid oder Ultramarinblau, Antistatika, wie Glycerinfettsäureester oder Tenside, bevorzugt Glycerinfettsäureester, Alkylsulfonate oder quartäre Ammoniumverbindungen, Gleitmittel, wie langkettige Fettsäuren und deren Salze, insbesondere Stearate sowie niedermolekulares Polyethylen oder Polypropylen, UV-Absorber, wie Tetrakis-(2,4-di-tert-butylphenyl)biphenylendiphosphonit, Füllstoffe, wie Glasfasern und Antioxidantien, wie 2,6-Di-tert-butyl-p-kresol.

Die (ii) Zusammensetzung der Laminierfolien kann von 0 Gew.-% bis 10 Gew.-% an Additiven enthalten, bevorzugt von 0,5 Gew.-% bis 6 Gew.-%, besonders bevorzugt von 1 Gew.-% bis 4 Gew.-% bezogen auf den Gesamtgehalt der Zusammensetzung der Laminierfolien von 100 Gew.-%.

Die vorliegende Erfindung betrifft weiterhin eine Laminiertasche, die innenseitig eine hitzeaktivierbare Schmelzklebeschicht umfassend eine (i) Schmelzkleberzusammensetzung aufweist. Die Laminiertasche umfasst zwei übereinander liegende Laminierfolien, die an mindestens einer ihrer Seitenkanten miteinander verbunden sind, und vorzugsweise jeweils auf der einander zugewandten Seite eine hitzeaktivierbare Schmelzklebeschicht aufweisen. Die hitzeaktivierbare Schmelzklebeschicht umfassend eine (i) Schmelzkleberzusammensetzung ist bei Umgebungstemperatur nicht klebrig. Die innenseitig in der Laminiertasche aufgebrachte hitzeaktivierbare Schmelzklebeschicht umfassend eine (i) Schmelzkleberzusammensetzung wird erst bei erhöhten Temperaturen über Raumtemperatur klebrig. Erfindungsgemäß sollen insbesondere keine Schmelz-Haftkleber verwendet werden. Die Aktivierungstemperatur der (i) Schmelzkleberzusammensetzung ist insbesondere höher als 70 °C, um ein Verkleben der Laminiertaschen während der Lagerung zu verhindern.

Die (i) Schmelzkleberzusammensetzung umfasst mindestens die Komponenten:
b1) von 40 Gew.-% bis 100 Gew.-% Polymerkomponente
b2) von 0 Gew.-% bis 60 Gew.-% Wachs
b3) von 0 Gew.-% bis 40 Gew.-% Klebrigmacher
b4) von 0 Gew.-% bis 10 Gew.-% Additiv

Die einzelnen Komponenten addieren sich in der (i) Schmelzkleberzusammensetzung auf 100 Gew.-%.

Die Temperatur zur Aktivierung der innenseitig auf die Laminiertasche aufgebrachten Schmelzklebeschicht umfassend die (i) Schmelzkleberzusammensetzung liegt mindestens 30 °C unter der Wärmeformbeständigkeitstemperatur der a1) bioabbaubaren Polymere und oder (ii) Zusammensetzung der Laminierfolien und/oder der Laminierfolien, bevorzugt mindestens 40 °C, besonders bevorzugt mindestens 50 °C.

Die erfindungsgemäße (i) Schmelzkleberzusammensetzung umfasst b1) eine Polymerkomponente enthaltend mindestens ein Polymer ausgesucht aus Homopolymeren und Copolymeren, umfassend Polyolefine, wie Polyethylen und deren Vinyl Copolymer Ethylenvinylacetat, Polyurethane, Polyamide und Polyester, wie Polylactid, Polycaprolacton, Poly-3-hydroxybutyrat, Poly-3-hydroxyvalerat und Polyester aus der Polykondensation von Dicarbonsäuren mit Diolen.

Die (i) Schmelzkleberzusammensetzung kann nach einer bevorzugten Ausführungsform b1) mindestens ein bioabbaubares Polymer enthalten, wie einen bioabbaubaren aliphatischen Polyester. Besonders bevorzugt sind bioabbaubare Polyester ausgewählt aus Polylactid, Polycaprolacton, Polyhydroxybuttersäure oder Polyhydroxy-Valeriansäure, Polyester aus der Polykondensation von Dicarbonsäuren mit Diolen, insbesondere Sebacinsäure und Glycerol, besonders bevorzugt Polycaprolacton und Polylactid. Ebenso können Mischungen der jeweiligen Polyester verwendet werden.

Die (i) Schmelzkleberzusammensetzung kann von 40 Gew.-% bis 100 Gew.-% an bioabbaubarem Polymer enthalten, bevorzugt von 45 Gew.-% bis 90 Gew.-%, besonders bevorzugt von 45 Gew.-% bis 80 Gew.-%, bezogen auf den Gesamtgehalt der i) Schmelzkleberzusammensetzung von 100 Gew.-%.

Die (i) Schmelzkleberzusammensetzung kann optional b2) mindestens ein Wachs mit einem Schmelzpunkt zwischen 40 °C und 150 °C enthalten. Wachse sind Stoffe, die bei über 40 °C ohne Zersetzung schmelzen und wenig oberhalb des Schmelzpunktes leicht flüssig sind. Erfindungsgemäße Wachse sind ausgewählt aus pflanzlichen Wachsen, wie Karnaubawachs, Rizinuswachs, Sojawachs, Candelillawachs, Reiswachs, Zuckerrohrwachs und dimerisierten biobasierten Fettsäuren, tierischen Wachsen, wie Bienenwachs und Wollwachs, mineralischen Wachsen, synthetischen Wachsen, wie Polyethylen, Polypropylen und Fischer-Tropsch-Wachse sowie Petroleum Wachsen, wie Paraffin.

Nach einer bevorzugten Ausführungsform werden ausschließlich biobasierte Wachse verwendet, wie beispielsweise Sojawachs, Rizinuswachs, Karnaubawachs, Candelillawachs, Reiswachs, Zuckerrohrwachs oder dimerisierte biobasierte Fettsäuren.

Die erfindungsgemäße (i) Schmelzkleberzusammensetzung kann von 0 Gew.-% bis 60 Gew.-% enthalten, bevorzugt von 10 Gew.-% bis 50 Gew.-%, an Wachs, bezogen auf den Gesamtgehalt der (i) Schmelzkleberzusammensetzung von 100 Gew.-%.

Die (i) Schmelzkleberzusammensetzung kann optional b3) mindestens einen Klebrigmacher enthalten. Erfindungsgemäße Klebrigmacher umfassen aliphatische und aromatische Kohlenwasserstoffharze (zum Beispiel Polymere auf Basis ungesättigter C₅- oder C₉-Monomere), Terpenharze, Terpenphenolharze, Polyterpenharze auf Basis von α-Pinen und/oder β-Pinen und/oder δ- Limonen, aromatische Harze wie Cumaron-, Inden-Harze oder Harze auf Basis Styrol oder α-Methylstyrol sowie biobasierte Harze.

Nach einer bevorzugten Ausführungsform kann die (i) Schmelzkleberzusammensetzung mindestens einen biobasierten Klebrigmacher enthalten, wie biobasierte Harze, beispielsweise Pinienharz oder Kolophoniumharz.

Die erfindungsgemäße (i) Schmelzkleberzusammensetzung kann von 0 Gew.-% bis 40 Gew.-% an Klebrigmacher enthalten, bevorzugt von 10 Gew.-% bis 30 Gew.-%, bezogen auf den Gesamtgehalt der (i) Schmelzkleberzusammensetzung von 100 Gew.-%.

Die (i) Schmelzkleberzusammensetzung kann optional b4) weitere Additive enthalten. Diese dem Fachmann allgemein bekannten Additive umfassen Antiblockmittel, wie feinpulverige Oxide von Aluminium oder Silizium und gefällte Kieselsäure, Farbstoffe und Pigmente, wie Titandioxid oder Ultramarinblau, Füllstoffe, wie Glasfasern und Antioxidantien, wie Pentaerythritol-tetrakis-3-(3,5-di-tert-butyl-4-hydroxyphenyl)propionat oder 2,6-Di-tert-butyl-p-kresol.

Die (i) Schmelzkleberzusammensetzung kann von 0 Gew.-% bis 10 Gew.-% an Additiven enthalten, bevorzugt von 0,5 Gew.-% bis 6 Gew.-%, besonders bevorzugt von 1 Gew.-% bis 4 Gew.-% bezogen auf den Gesamtgehalt der (i) Schmelzkleberzusammensetzung von 100 Gew.-%.

Die hitzeaktivierbare Schmelzklebeschicht umfassend die (i) Schmelzkleberzusammensetzung kann die Laminiertasche innenseitig vollständig oder nur zu einem Teil, beispielsweise 50 % der Fläche bzw. 30 % der innenseitigen Fläche der Laminiertasche bedecken.

Pro Quadratmeter an Laminierfolie werden vorzugsweise von 5 g bis 60 g, bevorzugt von 5 g bis 45 g der Schmelzklebeschicht der (i) Schmelzkleberzusammensetzung aufgetragen, besonders bevorzugt von 15 g bis 45 g.

Um ein möglichst einfaches und schnelles Einlegen des Blattguts in die Laminiertasche zu ermöglichen kann die elektrostatische Aufladung verringert werden. Hierzu weist die erfindungsgemäße Laminiertasche an der Innenseite und/oder die (i) Schmelzklebeschicht an der Innenseite der Laminiertasche eine Rauigkeit auf. Die Rauigkeit wird nach DIN EN ISO 25178 bestimmt. Die Rauigkeit auf der Innenseite der Laminiertasche oder der Schmelzklebeschicht kann von 5 µm bis 20 µm betragen, bevorzugt von 5 µm bis 15 µm, besonders bevorzugt 10 µm. Die Rauigkeit nach DIN EN ISO 25178 ist insbesondere der flächenbezogene Rauheitswert Sₐ. Der flächenbezogene Rauheitswert auf der Innenseite der Laminiertasche und/oder der Schmelzklebeschicht auf der Innenseite der Laminiertasche kann von 5 µm bis 20 µm betragen, bevorzugt von 5 µm bis 15 µm, besonders bevorzugt von 10 µm.

Kunststoffe mit einer geringen elektrostatischen Aufladung sind solche, die einen Oberflächenwiderstand zwischen 10⁹ und 10¹² Ω aufweisen. Um die elektrostatische Aufladung zu verringern können der (ii) Zusammensetzung der Laminierfolien a4) Antistatika zugesetzt werden.

In einer bevorzugten Ausführungsform können die Laminierfolien einen Oberflächenwiderstand von 1 · 10⁹ Ω bis 9 · 10¹³ Ω aufweisen, bevorzugt von 1 · 10⁹ Ω bis 9 · 10¹² Ω, besonders bevorzugt von 1 · 10¹⁰ Ω bis 9 · 10¹² Ω. Der Oberflächenwiderstand wird nach DIN 53482 mit einer Messspannung von 100 V mit einem Teraohmmeter der Firma Knick bestimmt.

In einer weiteren besonderen Ausführungsform können die Laminierfolien einen dynamischen Reibungskoeffizienten von 0,05 bis 0,4 aufweisen, bevorzugt von 0,05 bis 0,3, besonders bevorzugt von 0,05 bis 0,25. Die Messung des Reibungskoeffizienten erfolgt gemäß ISO 8295

In einer weiteren besonders bevorzugten Ausführungsform können die Laminierfolien einen Oberflächenwiderstand von 1 · 10⁹ Ω bis 9 · 10¹³ Ω aufweisen, bevorzugt von 1 · 10⁹ Ω bis 9 . 10¹² Ω, besonders bevorzugt von 1 · 10¹⁰ Ω bis 9 · 10¹² Ω , wobei die Laminiertasche auf der inneren Seite eine Rauigkeit, insbesondere einen flächenbezogene Rauheitswert, von 5 µm bis 20 µm aufweist, bevorzugt von 5 µm bis 15 µm,besonders bevorzugt von 10 µm.

Die Erfindung umfasst weiterhin ein Verfahren zur Herstellung von biobasierten Laminiertaschen, sowie eine Laminiertasche erhältlich nach einem Verfahren, mit den Schritten:
(1) Extrudieren einer ersten Zusammensetzung, die als eine Komponente bioabbaubare Polymere enthält, bei erhöhter Temperatur, insbesondere über der Schmelztemperatur der bioabbaubaren Polymere, insbesondere bei mindestens 140 °C, bevorzugt bei mindestens 180 °C, besonders bevorzugt bei mindestens 210 °C, zu einer Laminierfolie einer ersten Zusammensetzung, mit einer Schichtdicke von 15 µm bis 260 µm,und optional Abkühlen der Laminierfolie auf 20 °C bis 135 °C, bevorzugt auf 20 °C bis 75 °C, besonders bevorzugt auf 20 °C bis 65 °C, insbesondere innerhalb von 10 s bis 8 min, wobei die Laminierfolie eine Wärmeformbeständigkeitstemperatur von kleiner 99 °C aufweist,
(2) Kristallisierung der bioabbaubaren Polymere enthalten in der in Schritt (1) hergestellten Laminierfolie der ersten Zusammensetzung durch Erhitzen der Laminierfolie insbesondere auf eine Temperatur oberhalb der Glasübergangstemperatur der bioabbaubaren Polymere und unter der Schmelztemperatur der bioabbaubaren Polymere, bevorzugt auf 65 °C bis 135 °C, insbesondere für weniger als 5 min, bevorzugt weniger als 3 min, besonders bevorzugt weniger als 1 min und optional abgekühlt, bevorzugt wird definiert abgekühlt und Erhalten der (ii) Laminierfolie einer Zusammensetzung umfassend als mindestens eine Komponente bioabbaubare Polymere enthält, und die bioabbaubaren Polymere mindestens ein biobasiertes Polymer enthalten, wobei das biobasierte Polymer einen Kristallisationsgrad (ΔH) gemessen als Schmelzwärme von größer gleich 30 J/g bis kleiner gleich 90 J/g aufweist, und wobei die Laminierfolie eine Wärmeformbeständigkeitstemperatur von mindestens 100 °C aufweist,
(3) Aufbringen einer (i) Schmelzkleberzusammensetzung als hitzeaktivierbare Schmelzklebeschicht auf eine der beiden Seiten der in Schritt (2) bereitgestellten Laminierfolie,
(4) Bereitstellen von zwei gegenüberliegenden Laminierfolien, die mit der in Schritt (3) aufgebrachten hitzeaktivierbaren Schmelzklebeschicht zueinander liegen,
(5) Verbinden der zwei in Schritt (4) bereitgestellten Laminierfolien an mindestens einer Seitenkante zu einer Laminiertasche, die innenseitig die hitzeaktivierbare Schmelzklebeschicht aufweist.

Bevorzugt ist ein Verfahren zur Herstellung von biobasierten Laminiertaschen, sowie eine Laminiertasche erhältlich nach einem Verfahren, dadurch gekennzeichnet, dass die (ii) Zusammensetzung der Laminierfolien und die erste Zusammensetzung mindestens die Komponenten
a1) von 67 Gew.-% bis 100 Gew.-% bioabbaubares Polymer
a2) von 0 Gew.-% bis 10 Gew.-% Keimbildner
a3) von 0 Gew.-% bis 13 Gew.-% Weichmacher
a4) von 0 Gew.-% bis 10 Gew.-% Additive
umfasst.

Besonders bevorzugt ist ein Verfahren zur Herstellung von biobasierten Laminiertaschen, sowie eine Laminiertasche erhältlich nach einem Verfahren, dadurch gekennzeichnet, dass die (i) Schmelzkleberzusammensetzung mindestens die Komponenten
b1) von 40 Gew.-% bis 100 Gew.-% Polymerkomponente
b2) von 0 Gew.-% bis 60 Gew.-% Wachs
b3) von 0 Gew.-% bis 40 Gew.-% Klebrigmacher
b4) von 0 Gew.-% bis 10 Gew.-% Additive
umfasst.

Das Aufbringen der Schmelzklebeschicht kann durch Aufsprühen und/oder mittels einer Walze und/oder eines Rakels erfolgen, bevorzugt mittels einer Walze.

In einer bevorzugten Ausführungsform kann der Schmelzkleber mit einer Walze auf die Laminierfolien aufgetragen werden, deren Oberfläche eine Rauigkeit aufweist, wobei die Rauigkeit von 5 µm bis 20 µm betragen kann, bevorzugt von 5 µm bis 15 µm,besonders bevorzugt 10 µm. Insbesondere weist die Oberfläche der Walze eine Rauigkeit auf, wobei der flächenbezogene Rauheitswert von 5 µm bis 20 µm betragen kann, bevorzugt von 5 µm bis 15 µm, besonders bevorzugt von 10 µm.

Durch die Verwendung der Walze, deren Oberfläche eine erfindungsgemäße Rauigkeit aufweist, zum Auftragen des Schmelzklebers auf die Laminierfolie kann die später innenseitig in der Laminiertasche angeordnete (i) Schmelzklebeschicht eine Oberfläche aufweisen, die eine Rauigkeit, insbesondere einen flächenbezogenen Rauheitswert von 5 µm bis 20 µm aufweist, bevorzugt von 5 µm bis 15 µm,besonders bevorzugt von 10 µm.

In einer bevorzugten Ausführungsform wird die in (1) hergestellte Laminierfolie einer ersten Zusammensetzung in Schritt (1) auf 20 °C bis 135 °C, bevorzugt auf 20 °C bis 75 °C, besonders bevorzugt auf 20 °C bis 65 °C abgekühlt, bevorzugt gequencht, insbesondere innerhalb von 10 s bis 8 min abgekühlt, bevorzugt innerhalb von 10 s bis 5 min, besonders bevorzugt von 10 s bis 60 s. Durch das Quenchen, bzw. das schnelle Abkühlen der Laminierfolien einer ersten Zusammensetzung, wird die Kristallisation zunächst unterdrückt.

Die in (1) hergestellten Laminierfolien können in Schritt (2) zusätzlich in Längsrichtung verstreckt werden, insbesondere zur Orientierung verstreckt werden.

In einer besonders bevorzugten Ausführungsform wird die in (2) hergestellte (ii) Laminierfolie einer Zusammensetzung im Anschluss an Schritt (2) abgekühlt, insbesondere auf eine Temperatur unterhalb der Glasübergangstemperatur der bioabbaubaren Polymere auf 20 °C bis 75 °C, bevorzugt auf 20 °C bis 65 °C, besonders bevorzugt auf 20 °C bis 55 °C.

Die Laminierfolien können im Anschluss an Schritt (2) in einem weiteren Schritt (2b) mit einem Koronaverfahren, wie beispielsweise beschrieben in EP 1746696 A1, behandelt werden, um das Auftragen des Schmelzklebers auf die Laminierfolie zu erleichtern, insbesondere das Haften des Schmelzklebers auf der Laminierfolie. Die Laminierfolien werden dabei einer elektrischen Hochspannungs-Entladung ausgesetzt. Alternativ können die Folien auch mit einem Flamm- oder Plasmaverfahren behandelt werden.

### Beispiele

### (ii) Zusammensetzung der Laminierfolien und erste Zusammensetzung:

### Beispiel 1

a1) 97,2 Gew.-% Poly(L)-Lactid
a2) 2,8 Gew.-% Polyethylenglykol

### Beispiel 2

a1) 85,2 Gew.-% Poly(L)-Lactid
a2) 2,6 Gew.-% Polyethylenglykol
a3) 12,2 Gew.-% Glycerol

### Beispiel 3

a1) 98,5 Gew.-% Poly(L)-Lactid
a2) 1,5 Gew.-% Talkum

### Beispiel 4

a1) 50 Gew.-% Copolymer I) mit einem L-Lactid Anteil von 99,5 Gew.-%
a1) 50 Gew.-% Copolymer II) mit einem D-Lactid Anteil von 99,5 Gew.-%

### Beispiel 5

a1) 100 Gew.-% eines Gemischs aus 60 Gew.-% Poly(L)-Lactid und 40 Gew.-% Poly(D)-Lactid

### Beispiel 6

a1) 88,5 Gew.-% eines Gemischs aus 60 Gew.-% Poly(L)-Lactid und 40 Gew.-% Poly(D)-Lactid
a3) 11,5 Gew.-% Sorbitol

Die Beispiele 5 oder 6 werden zur Herstellung einer (ii) Laminierfolie einer Zusammensetzung umfassend Stereokomplexe des Poly(L)-Lactids und des Poly(D)-Lactids eingesetzt.

Die einzelnen Komponenten addieren sich in der (ii) Zusammensetzung der Laminierfolien und der ersten Zusammensetzung auf 100 Gew.-%. Die erste Zusammensetzung aus den Beispielen 1, 2, 3, 4, 5 oder 6 wurden zur Herstellung einer biobasierten und bioabbaubaren Laminierfolie bei einer Temperatur von 190 °C extrudiert. Die Laminierfolien wurden in Endlosbahnen gefertigt und anschließend in unter 60 s auf Raumtemperatur abgekühlt.

Zur Kristallisation des Polylactids wurden die erhaltenen Laminierfolien für weniger als eine Minute auf eine Temperatur von 65° bis 135 °C erhitzt und anschließend auf Raumtemperatur abgekühlt.

Anschließend wurde die hitzeaktivierbare Schmelzklebeschicht umfassend die (i) Schmelzkleberzusammensetzung aus den Beispielen 7 oder 8 auf die Laminierfolie aufgetragen.

### (i) Schmelzkleberzusammensetzung:

### Beispiel 7

b1) 61 Gew.-% Polycaprolacton
b2) 39 Gew.-% Rizinuswachs

### Beispiel 8

b1) 49,5 Gew.-% Polycaprolacton
b2) 21,9 Gew.-% Paraffin
b3) 28 Gew.-%Terpenphenolharz
b4) 0,6 Gew.-% Pentaerythritol-tetrakis-3-(3,5-di-tert-butyl-4-hydroxyphenyl)propionat

Die einzelnen Komponenten addieren sich in der (i) Schmelzkleberzusammensetzung auf 100 Gew.-%.

Im Anschluss wurden zwei mit der jeweiligen Seite der Schmelzklebeschicht aneinander liegende Laminierfolien an mindestens einer Seitenkante verbunden. Hierzu wurden die Laminierfolien an der mindestens einen Seitenkante erhitzt und unter Druck verschmolzen.

Anschließend wurden die zu Laminiertaschen verbundenen Laminierfolien, in zu den gängigen DIN-/ISO 216-Papierformaten passende Stücke geschnitten, bevorzugt A4, A2, A3 und A5.

## Patentansprüche

1. Laminiertasche für das Einlaminieren von Blattgut mit zwei übereinander liegenden Laminierfolien, die an mindestens einer ihrer Seitenkanten miteinander verbunden sind,
(i) wobei die Laminiertasche innenseitig eine hitzeaktivierbare Schmelzklebeschicht umfassend eine Schmelzkleberzusammensetzung aufweist, und
(ii) die Laminierfolien eine Zusammensetzung umfassend als mindestens eine Komponente bioabbaubare Polymere enthalten,
**dadurch gekennzeichnet, dass**
die Laminierfolien eine Wärmeformbeständigkeitstemperatur von mindestens 100 °C aufweisen und die bioabbaubaren Polymere mindestens ein biobasiertes Polymer enthalten, wobei das biobasierte Polymer einen Kristallisationsgrad (ΔH) gemessen als Schmelzwärme von größer gleich 30 J/g bis kleiner gleich 90 J/g aufweist.

2. Laminiertasche nach Anspruch 1, **dadurch gekennzeichnet, dass** die Laminierfolien eine Wärmeformbeständigkeitstemperatur von mindestens 130 °C aufweisen, bevorzugt mindestens 150 °C, besonders bevorzugt mindestens 160 °C.

3. Laminiertasche nach Anspruch 1 oder 2, **dadurch gekennzeichnet, dass** die bioabbaubaren Polymere mindestens ein biobasiertes Polymer enthalten, bevorzugt mindestens ein Polylactid, besonders bevorzugt aus mindestens einem Polylactid bestehen.

4. Laminiertasche nach Anspruch 3, **dadurch gekennzeichnet, dass** die bioabbaubaren Polymere mindestens ein biobasiertes Polymer enthalten und das biobasierte Polymer einen Kristallisationsgrad (ΔH) gemessen als Schmelzwärme von größer gleich 40 J/g bis kleiner gleich 90 J/g, besonders bevorzugt von größer gleich 60 J/g bis kleiner gleich 90 J/g, aufweist.

5. Laminiertasche nach einem der Ansprüche 1 bis 4, **dadurch gekennzeichnet, dass** die bioabbaubaren Polymere von 50 Gew.-% bis 75 Gew.-% Poly(L)-Lactid und von 25 Gew.-% bis 50 Gew.-% Poly(D)-Lactid bezogen auf den Gesamtgehalt der bioabbaubaren Polymere von 100 Gew.-% enthalten.

6. Laminiertasche nach einem der Ansprüche 1 bis 5, **dadurch gekennzeichnet, dass** die bioabbaubaren Polymere von 0,5 Gew.-% bis 50 Gew.-% an Stereokomplexen des Poly(L)-Lactids und des Poly(D)-Lactids in der Gesamtzusammensetzung der bioabbaubaren Polymere von 100 Gew.-% enthalten.

7. Laminiertasche nach einem der Ansprüche 1 bis 6, **dadurch gekennzeichnet, dass** die
(i) Schmelzkleberzusammensetzung mindestens die Komponenten umfasst
b1) von 40 Gew.-% bis 100 Gew.-% eines Polymers ausgesucht aus Ethylenvinylacetat, Polycaprolacton und Polylactid, bevorzugt Polylactid,
b2) von 0 Gew.-% bis 60 Gew.-% eines Wachs, bevorzugt eines biobasierten Wachs, besonders bevorzugt Rizinuswachs,
b3) von 0 Gew.-% bis 40 Gew.-% eines Klebrigmachers, bevorzugt eines biobasierten Klebrigmachers, besonders bevorzugt Kolophoniumharz, von 10 Gew.-% bis 30 Gew.-%,
b4) von 0 Gew.-% bis 10 Gew.-% Additive, bevorzugt Antioxidantien, besonders bevorzugt Pentaerythritol-tetrakis-(3-(3,5-di-tert-butyl-4-hydroxyphenyl)propionat),
wobei die Gesamtzusammensetzung der Schmelzkleberzusammensetzung 100 Gew.-% beträgt.

8. Laminiertasche nach einem der Ansprüche 1 bis 7, **dadurch gekennzeichnet, dass**
(ii) die Zusammensetzung der Laminierfolien die Komponenten umfasst
a1) bioabbaubare Polymere, und
a2) mindestens einen Keimbildner, wobei der Keimbildner bevorzugt einen bioabbaubaren Keimbildner ausgesucht aus Distearylethylendiamid, Polylactid, Polybutylenadipat, Polybutylenadipat-Terephthalat und Polyethylenglykol enthält, besonders bevorzugt einen biobasierten und bioabbaubaren Keimbildner ausgewählt aus Distearylethylendiamid und Polylactid, insbesondere ein Gemisch der Homopolymere Poly(L)-Lactid und Poly(D)-Lactid.

9. Laminiertasche nach Anspruch 8, **dadurch gekennzeichnet, dass**
(ii) die Zusammensetzung der Laminierfolien umfasst
a1) von 90 Gew.-% bis 99,9 Gew.-% bioabbaubare Polymere, und
a2) von 0,1 Gew.-% bis 10 Gew.-% des mindestens einen Keimbildners, bevorzugt von 0,1 Gew.-% bis 5 Gew.-%, besonders bevorzugt von 0,1 Gew.-% bis 3 Gew.-%, wobei die Gesamtzusammensetzung der Zusammensetzung der Laminierfolien 100 Gew.-% beträgt.

10. Laminiertasche nach Anspruch 8, **dadurch gekennzeichnet, dass**
(ii) die Zusammensetzung der Laminierfolien
a1) von 67 Gew.-% bis 88,9 Gew.-% bioabbaubare Polymere,
a2) von 0,1 Gew.-% bis 10 Gew.-% des mindestens einen Keimbildners,
a3) von 11 Gew.-% bis 13 Gew.-% von mindestens einem Weichmacher enthält, bevorzugt einem biobasierten Weichmacher, insbesondere biobasiertes Glycerol oder biobasiertes Sorbitol, bevorzugt von 11,5 Gew.-% bis 12,5 Gew.-%,
wobei die Gesamtzusammensetzung der Zusammensetzung der Laminierfolien 100 Gew.-% beträgt.

11. Laminiertasche nach einem der Ansprüche 1 bis 10, **dadurch gekennzeichnet, dass** sie auf der Innenseite eine Rauigkeit zwischen 5 µm und 20 µm aufweist.

12. Verfahren zum Herstellen einer Laminiertasche nach einem der Ansprüche 1 bis 11 mit den Schritten:
(1) Extrudieren einer ersten Zusammensetzung, die als eine Komponente bioabbaubare Polymere enthält, bei erhöhter Temperatur zu einer Laminierfolie einer ersten Zusammensetzung, die als eine Komponente bioabbaubare Polymere enthält, mit einer Schichtdicke von 15 µm bis 260 µm, wobei die Laminierfolie eine Wärmeformbeständigkeitstemperatur von kleiner 99 °C aufweist,
(2) Kristallisierung der bioabbaubaren Polymere enthalten in der in Schritt (1) hergestellten Laminierfolie der ersten Zusammensetzung, durch Erhitzen der Laminierfolie auf 65 °C bis 135 °C und
Erhalten der (ii) Laminierfolie einer Zusammensetzung umfassend als mindestens eine Komponente bioabbaubare Polymere, wobei die bioabbaubaren Polymere mindestens ein biobasiertes Polymer enthalten, und wobei das biobasierte Polymer einen Kristallisationsgrad (ΔH) gemessen als Schmelzwärme von größer gleich 30 J/g bis kleiner gleich 90 J/g aufweist, und wobei die Laminierfolie eine Wärmeformbeständigkeitstemperatur von mindestens 100 °C aufweist,
(3) Aufbringen einer (i) Schmelzkleberzusammensetzung als hitzeaktivierbare Schmelzklebeschicht auf eine der beiden Seiten der in Schritt (2) bereitgestellten Laminierfolie,
(4) Bereitstellen von zwei gegenüberliegenden Laminierfolien, die mit der in Schritt (3) aufgebrachten hitzeaktivierbaren Schmelzklebeschicht zueinander liegen,
(5) Verbinden der zwei in Schritt (4) bereitgestellten Laminierfolien an mindestens einer Seitenkante zu einer Laminiertasche, die innenseitig die hitzeaktivierbare Schmelzklebeschicht aufweist.

13. Verfahren zum Herstellen einer Laminiertasche nach Anspruch 12, **dadurch gekennzeichnet, dass**
(ii) die Zusammensetzung der Laminierfolien und die erste Zusammensetzung die Komponenten
a1) von 67 Gew.-% bis 100 Gew.-% bioabbaubare Polymere
a2) von 0 Gew.-% bis 10 Gew.-% Keimbildner
a3) von 0 Gew.-% bis 13 Gew.-%Weichmacher
a4) von 0 Gew.-% bis 10 Gew.-% Additive
umfasst, wobei die Gesamtzusammensetzung 100 Gew.-% beträgt.

14. Verfahren zum Herstellen einer Laminiertasche nach Anspruch 12 oder 13, **dadurch gekennzeichnet, dass**
(i) die Schmelzkleberzusammensetzung die Komponenten
b1) von 40 Gew.-% bis 100 Gew.-% Polymerkomponente
b2) von 0 Gew.-% bis 60 Gew.-% Wachs
b3) von 0 Gew.-% bis 40 Gew.-% Klebrigmacher
b4) von 0 Gew.-% bis 10 Gew.-% Additive
umfasst, wobei die Gesamtzusammensetzung der Schmelzkleberzusammensetzung 100 Gew.-% beträgt.

## Claims

1. Laminating pouch for lamination of sheet material having two laminating foils lying on top of each other, being interconnected on at least one of their side edges,
(i) the laminating pouch having a heat-activatable hot-melt adhesive layer on the inside comprising a hot-melt adhesive composition, and
(ii) the laminating foils containing a composition comprising biodegradable polymers as at least one component,
**characterised in that**
the laminating foils have a heat deflection temperature of at least 100 °C and the biodegradable polymers contain at least one bio-based polymer, the bio-based polymer having a degree of crystallisation (ΔH), measured as heat of fusion of greater than or equal to 30 J/g to less than or equal to 90 J/g.

2. Laminating pouch according to claim 1, **characterised in that** the laminating foils have a heat deflection temperature of at least 130 °C, preferably at least 150 °C, particularly preferably at least 160 °C.

3. Laminating pouch according to claim 1 or 2, **characterised in that** the biodegradable polymers contain at least one bio-based polymer, preferably at least one polylactide, particularly preferably consist of at least one polylactide.

4. Laminating pouch according to claim 3, **characterised in that** the biodegradable polymers contain at least one bio-based polymer and the bio-based polymer has a degree of crystallisation (ΔH), measured as heat of fusion of greater than or equal to 40 J/g to less than or equal to 90 J/g, particularly preferably of greater than or equal to 60 J/g to less than or equal to 90 J/g.

5. Laminating pouch according to any one of the claims 1 to 4, **characterised in that** the biodegradable polymers contain from 50 % by weight to 75 % by weight poly(L)-lactide and from 25 % by weight to 50 % by weight poly(D)-lactide, based on the total content of the biodegradable polymers of 100 % by weight.

6. Laminating pouch according to any one of the claims 1 to 5, **characterised in that** the biodegradable polymers contain from 0.5 % by weight to 50 % by weight of stereocomplexes of poly(L)-lactide and poly(D)-lactide in the total composition of the biodegradable polymers of 100 % by weight.

7. Laminating pouch according to any one of the claims 1 to 6, **characterised in that** the (i) hot-melt adhesive composition comprises at least the components
b1) from 40 % by weight to 100 % by weight of a polymer selected from ethylene vinyl acetate, polycaprolactone and polylactide, preferably polylactide,
b2) from 0 % by weight to 60 % by weight of a wax, preferably of a bio-based wax, particularly preferably castor wax,
b3) from 0 % by weight to 40 % by weight of a tackifier, preferably of a bio-based tackifier, particularly preferably rosin resin, from 10 % by weight to 30 % by weight,
b4) from 0 % by weight to 10 % by weight additives, preferably antioxidants, particularly preferably pentaerythritol tetrakis(3-(3,5-di-tert-butyl 4-hydroxyphenyl) propionate),
the total composition of the hot-melt adhesive composition amounting to 100 % by weight.

8. Laminating pouch according to any one of the claims 1 to 7, **characterised in that** (ii) the composition of the laminating foils comprises the components
a1) biodegradable polymers, and
a2) at least one nucleating agent, the nucleating agent preferably containing a biodegradable nucleating agent selected from ethylene bis(stearamide), polylactide, polybutylene adipate, polybutylene adipate terephthalate and poly ethylene glycol, particularly preferably a bio-based and biodegradable nucleating agent selected from ethylene bis(stearamide) and polylactide, in particular a mixture of the homopolymers poly(L)-lactide and poly(D)-lactide.

9. Laminating pouch according to claim 8, **characterised in that**
(ii) the composition of the laminating foils comprises the components
a1) from 90 % by weight to 99.9 % by weight biodegradable polymers, and
a2) from 0.1 % by weight to 10 % by weight of the at least one nucleating agent, preferably from 0.1 % by weight to 5 % by weight, particularly preferably from 0.1 % by weight to 3 % by weight,
the total composition of the composition of the laminating foils amounting to 100 % by weight.

10. Laminating pouch according to claim 8, **characterised in that**
(ii) the composition of the laminating foils contains
a1) from 67 % by weight to 88.9 % by weight biodegradable polymers,
a2) from 0.1 % by weight to 10 % by weight of the at least one nucleating agent,
a3) from 11 % by weight to 13 % by weight of at least one plasticizer, preferably of a bio-based plasticizer, in particular bio-based glycerol or bio-based sorbitol, preferably from 11.5 % by weight to 12.5 % by weight,
the total composition of the composition of the laminating foils amounting to 100 % by weight.

11. Laminating pouch according to any one of the claims 1 to 10, **characterised in** having a roughness on the inside between 5 µm and 20 µm.

12. Method for producing a laminating pouch according to any one of the claims 1 to 11 with the steps of:
(1) extruding a first composition containing biodegradable polymers as one component at elevated temperature to a laminating foil of a first composition containing biodegradable polymers as one component, having a layer thickness of 15 µm to 260 µm, the laminating foil having a heat deflection temperature of less than 99 °C,
(2) crystallisation of the biodegradable polymers contained in the laminating foil of the first composition obtained in step (1) by heating the laminating foil to 65 °C to 135 °C, and
obtaining the (ii) laminating foil of a composition comprising biodegradable polymers as at least one component, the biodegradable polymers containing at least one bio-based polymer, and the bio-based polymer having a degree of crystallisation (ΔH), measured as heat of fusion of greater than or equal to 30 J/g to less than or equal to 90 J/g, and the laminating foil having a heat deflection temperature of at least 100 °C,
(3) applying a (i) hot-melt adhesive composition as heat-activatable hot-melt adhesive layer to one of the two sides of the laminating foil provided in step (2),
(4) providing two laminating foils facing each other, lying with the heat-activatable hot-melt adhesive layer applied in step (3) against each other,
(5) connecting the two laminating foils provided in step (4) on at least one side edge to become a laminating pouch, having the heat-activatable hot-melt adhesive layer on the inside.

13. Method for producing a laminating pouch according to claim 12, **characterised in that** (ii) the composition of the laminating foils and the first composition comprises the components
a1) from 67 % by weight to 100 % by weight biodegradable polymers
a2) from 0 % by weight to 10 % by weight nucleating agents
a3) from 0 % by weight to 13 % by weight plasticizers
a4) from 0 % by weight to 10 % by weight additives
the total composition amounting to 100 % by weight.

14. Method for producing a laminating pouch according to claim 12 or 13, **characterised in that**
(i) the hot-melt adhesive composition comprises the components
b1) from 40 % by weight to 100 % by weight polymer component
b2) from 0 % by weight to 60 % by weight wax
b3) from 0 % by weight to 40 % by weight tackifiers
b4) from 0 % by weight to 10 % by weight additives
the total composition of the hot-melt adhesive composition amounting to 100 % by weight.

## Revendications

1. Pochette à plastifier pour la plastification du matériau en feuilles ayant deux films à plastifier superposant l'un à l'autre, étant interconnectés à au moins un de ses bords latéraux,
(i) la pochette à plastifier ayant une couche d'adhésif thermofusible activable par la chaleur à l'intérieur comprenant une composition d'adhésif thermofusible, et
(ii) les films à plastifier contenant une composition comprenant des polymères biodégradables en tant qu'au moins un composant,
**caractérisée en ce que**
les films à plastifier ont une température de fléchissement sous charge d'au moins 100 °C et les polymères biodégradables contiennent au moins un polymère biosourcé, le polymère biosourcé ayant un degré de cristallisation (ΔH), mesuré en chaleur de fusion de supérieure ou égale à 30 J/g à inférieure ou égale à 90 J/g.

2. Pochette à plastifier selon la revendication 1, **caractérisée en ce que** les films à plastifier ont une température de fléchissement sous charge d'au moins 130 °C, de préférence au moins 150 °C, de préférence plus particulière au moins 160 °C.

3. Pochette à plastifier selon la revendication 1 ou 2, **caractérisée en ce que** les polymères biodégradables contiennent au moins un polymère biosourcé, de préférence au moins un polylactide, de préférence plus particulière consistent en au moins un polylactide.

4. Pochette à plastifier selon la revendication 3, **caractérisée en ce que** les polymères biodégradables contiennent au moins polymère biosourcé et le polymère biosourcé a un degré de cristallisation (ΔH), mesuré en chaleur de fusion de supérieure ou égale à 40 J/g à inférieure ou égale à 90 J/g, de préférence plus particulière de supérieure ou égale à 60 J/g à inférieure ou égale à 90 J/g.

5. Pochette à plastifier selon l'une des revendications 1 à 4, **caractérisée en ce que** les polymères biodégradables contiennent de 50 % en poids à 75 % en poids du poly(L)-lactide et de 25 % en poids à 50 % en poids de poly(D)-lactide, basé sur la teneur totale des polymères biodégradables de 100 % en poids.

6. Pochette à plastifier selon l'une des revendications 1 à 5, **caractérisée en ce que** les polymères biodégradables contiennent de 0,5 % en poids à 50 % en poids des complexes stéréo du poly(L)-lactide et poly(D)-lactide dans la composition totale des polymères biodégradables de 100 % en poids.

7. Pochette à plastifier selon l'une des revendications 1 à 6, **caractérisée en ce que**
(i) la composition d'adhésif thermofusible comprend au moins les composants
b1) de 40 % en poids à 100 % en poids d'un polymère sélectionné parmi de l'éthylène-acétate de vinyle, de la polycaprolactone et du polylactide, de préférence du polylactide,
b2) de 0 % en poids à 60 % en poids d'une cire, de préférence d'une cire biosourcée, de préférence plus particulière la cire de ricin,
b3) de 0 % en poids à 40 % en poids d'un agent poisseux, de préférence d'un agent poisseux biosourcé, de préférence plus particulière la résine colophane, de 10 % en poids à 30 % en poids,
b4) de 0 % en poids à 10 % en poids des additifs, des préférence des antioxydants, de préférence plus particulière le pentaérythritol tétrakis(3-(3,5-di-tert-butyl 4-hydroxyphenyl) propionate),
la composition totale de la composition d'adhésif thermofusible se montant à 100 % en poids.

8. Pochette à plastifier selon l'une des revendications 1 à 7, **caractérisée en ce que** (ii) la composition des films à plastifier comprend les composants
a1) des polymères biodégradables, et
a2) au moins un agent de nucléation, l'agent de nucléation contenant de préférence un agent de nucléation biodégradable sélectionné parmi du bis(stéaramide) d'éthylène, du polylactide, de l'adipate de polybutylène, du téréphtalate d'adipate de polybutylène, du polyéthylène glycol, de préférence plus particulière un agent biosourcé et biodégradable sélectionné parmi du bis(stéaramide) d'éthylène et du polylactide, en particulière un mélange des homopolymères du poly(L)-lactide et du poly(D)-lactide.

9. Pochette à plastifier selon la revendication 8, **caractérisée en ce que**
(ii) la composition des films à plastifier comprend les composants
a1) de 90 % en poids à 99,9 % en poids des polymères biodégradables, et
a2) de 0,1 % en poids à 10 % en poids de l'au moins un agent de nucléation , de préférence de 0,1 % en poids à 5 % en poids, de préférence plus particulière de 0,1 % en poids à 3 % en poids,
la composition totale de la composition des films à plastifier se montant à 100 % en poids.

10. Pochette à plastifier selon la revendication 8, **caractérisée en ce que**
(ii) la composition des films à plastifier contient
a1) de 67 % en poids à 88,9 % en poids des polymères biodégradables,
a2) de 0,1 % en poids à 10 % en poids de l'au moins un agent de nucléation,
a3) de 11 % en poids à 13 % en poids d'au moins un plastifiant, de préférence d'un plastifiant biosourcé, en particulière le glycérol biosourcé ou le sorbitol biosourcé, de préférence de 11,5 % en poids à 12,5 % en poids,
la composition totale de la composition des films à plastifier se montant à 100 % en poids.

11. Pochette à plastifier selon l'une des revendications 1 a 10, **caractérisée** en ayant une rugosité à l'intérieure entre 5 µm et 20 µm.

12. Procédé pour produire une pochette à plastifier selon l'une des revendications 1 à 11 avec les étapes de :
(1) extruder une première composition contenant des polymères biodégradables en tant qu'un composant à la température élevée à un film à plastifier d'une première composition contenant des polymères biodégradables au tant qu'un composant, ayant une épaisseur de couche de 15 µm à 260 µm, le film à plastifier ayant une température de fléchissement sous charge d'inférieure à 99 °C,
(2) la cristallisation des polymères biodégradables contenus dans le film à plastifier de la première composition obtenu en étape (1) par chauffer le film à plastifier à 65 °C à 135 °C, et
obtenir le (ii) film à plastifier d'une composition comprenant des polymères biodégradables en tant qu'au moins un composant, les polymères biodégradables contenant au moins un polymère biosourcé, et le polymère biosourcé ayant un degré de cristallisation (ΔH), mesuré en chaleur de fusion de supérieure ou égale à 30 J/g à inférieure ou égale à 90 J/g, et le film à plastifier ayant un température de fléchissement sous charge d'au moins 100 °C,
(3) appliquer une (i) composition d'adhésif thermofusible en tant qu'une couche d'adhésif thermofusible activable par la chaleur à un des deux côtés du film à plastifier fourni en étape (2),
(4) fournir deux films à plastifier faisant face l'un à l'autre, situant avec la couche d'adhésif thermofusible activable par la chaleur appliquée en étape (3) l'un contre l'autre,
(5) connecter les deux films à plastifier fournis en étape (4) à au moins un bord latéral à devenir une pochette à plastifier, ayant une couche d'adhésif thermofusible activable par la chaleur à l'intérieur.

13. Procédé pour produire une pochette à plastifier selon la revendication 12, **caractérisé en ce que**
(ii) la composition des films à plastifier et la première composition comprend les composants
a1) de 67 % en poids à 100 % en poids des polymères biodégradables,
a2) de 0 % en poids à 10 % en poids des agents de nucléation
a3) de 0 % en poids à 13 % en poids des plastifiants
a4) de 0 % en poids à 10 % en poids des additifs
la composition totale se montant à 100 % en poids.

14. Procédé pour produire une pochette à plastifier selon la revendication 12 ou 13, **caractérisé en ce que**
(i) la composition d'adhésif thermofusible comprend les composants
b1) de 40 % en poids à 100 % en poids des composants polymères
b2) de 0 % en poids à 60 % en poids de la cire
b3) de 0 % en poids à 40 % en poids des agents poisseux
b4) de 0 % en poids à 10 % en poids des additifs
la composition totale de la composition d'adhésif thermofusible se montant à 100 % en poids.
